# EUROPÄISCHE PATENTSCHRIFT

(11) **EP 1 388 315 B1**
(45) Veröffentlichungstag und Bekanntmachung des Hinweises auf die Patenterteilung: **15.02.2006**
(21) Anmeldenummer: 03014340.8
(22) Anmeldetag: 26.06.2003
(51) Int. Cl.: A47J 43/25, A47J 19/02

(54) **Küchengerät**
Kitchen device
Appareil de cuisine

(30) Priorität: 07.08.2002 DE 20212132 U
(43) Veröffentlichungstag der Anmeldung: 11.02.2004
(73) Patentinhaber: Ihlow Stanz- und Kunststofftechnik GmbH, 31188 Holle (DE)
(72) Erfinder: Peter, Jörg Dipl.-Ing, 31188 Holle (DE)
(74) Vertreter: Sobisch, Peter

(56) Entgegenhaltungen:
- GB-A- 1 492 517
- GB-A- 1 599 694
- US-A1- 2002 174 754
- US-B1- 6 213 008

## Beschreibung

Die Erfindung bezieht sich auf ein Küchengerät entsprechend dem Oberbegriff des Anspruchs 1.

Derartige Küchengeräte sind als Restehalter allgemein bekannt und dienen dem zerschneidenden Bearbeiten von Gemüse, Obst und vergleichbaren Lebensmitteln in Verbindung mit einer Schneidvorrichtung, so dass der jeweilige Nutzer vor Unfallrisiken, die sich aus dem Schneidvorgang ergeben können, geschützt ist. Sie bestehen im Allgemeinen aus einem unterseitig, d.h. auf der mit dem Obst oder dem Gemüse in Verbindung stehendem Teil mit einer Profilierung versehenen Halter, über welchen bei der Relativbewegung gegenüber der Schneidvorrichtung eine Mitnahmewirkung auf das jeweilige Schnittgut ausgeübt wird.

Einige bekannte vergleichbare Küchengeräte ermöglichen praktisch keine Anpassung an unterschiedliche Volumina des Schnittgutes. Hinzu tritt, dass die ausübbare Mitnahmewirkung ausschließlich durch die Art der Profilierung und deren Eindringvermögen in das Schnittgut bestimmt wird. Ein unfallfreies Arbeiten mit diesen Küchengeräten setzt definierte Relativbewegungen zwischen diesem und der Schneidvorrichtung voraus. Das Risiko eines Abgleitens von einer bestimmungsgemäßen Bewegungsrichtung und die hiermit einhergehende Unfallgefahr ist bei diesen bekannten Geräten jedenfalls nicht immer ausgeräumt.

Aus der US 6,213,008 B1 ist ein vergleichbares Küchengerät bekannt. Dieses besteht aus einem Unterteil, welches zum Aufsetzen auf eine Schneidvorrichtung bestimmt ist und in einem mittleren Abschnitt eine zur Oberseite herausragende zylindrische Auswölbung zeigt, die zur Unterseite hin offen ausgebildet ist. Auf diese Auswölbung ist - gegenüber dieser vertikal gleitfähig - ein Oberteil aufgesetzt, welches über Ausnehmungen der oberen Abschlusswandung der Auswölbung in diese hineingreift und innerhalb dieser eine Stirnwandung bildet, die zusammen mit den zylindrischen Seitenwandungen der Auswölbung einen Aufnahmeraum für zu behandelndes Schnittgut bildet. Die genannte Stirnwandung ist auf ihrer, diesem Aufnahmeraum zugekehrten Seite mit dornartigen Vorsprüngen versehen, die zur Ausübung einer Mitnahmewirkung auf das Schnittgut dienen. Die Auswölbung ist ihrerseits femer durch Stifte gekennzeichnet, die bis in die Ebene der unterseitigen Öffnung ragen, die ebenfalls zum Eindringen in das Schnittgut und somit zur Ausübung einer Mitnahmewirkung bestimmt sind. Das Oberteil ist austauschbar angeordnet und kann durch einen saftpressenartigen Aufsatz ersetzt werden, der eine pyramidenstumpfartige äußere Gestaltung aufweist, wobei der mittels dieser ausgepresster Saft über Schlitze des Unterteils unterseitig aus diesem austritt und einem Aufnahmegefäß oder dergleichen zugeführt werden muss. Das Unterteil dieses bekannten Küchengerätes ist durch zueinander parallele Stege gekennzeichnet, die in Verbindung mit Seitenwandungen einer Schneidvorrichtung zur Ausübung einer Führungswirkung bestimmt sind, so dass relativ zu der Schneidvorrichtung nur eine bestimmte Bewegungsrichtung möglich ist und ein unfallträchtiges Abgleiten in seitlicher Richtung unterbunden wird. Während der Bewegung über eine Schneidvorrichtung wird eine Mitnahmewirkung auf das Schnittgut durch die Profilelemente der Stirnwandung und die genannten Stifte ausgeübt, somit lediglich durch Funktionselemente innerhalb des Aufnahmeraumes. Die auf das Schnittgut ausgeübte Führungswirkung kann somit in Abhängigkeit von der flächenhaften Erstreckung desselben ungleichförmig ausfallen.

Es ist vor diesem Hintergrund die Aufgabe der Erfindung, ein Küchengerät der eingangs bezeichneten Art zu konzipieren, welches bei einem einfachen konstruktiven Aufbau und guten Gebrauchseigenschaften eine zuverlässige Erfassung des Schnittgutes ermöglicht. Es ist insbesondere die Aufgabe der Erfindung, ein Küchengerät zu konzipieren, welches zum Zusammenwirken mit einer Schneidvorrichtung geeignet ist, wobei der Schneidvorgang auf einer Relativbewegung zwischen dem Küchengerät einerseits und der Schneidvorrichtung andererseits beruht. Gelöst ist diese Aufgabe bei einem solchen Küchengerät durch die Merkmale des Kennzeichnungsteils des Anspruchs 1.

Das Küchengerät ist durch einen zur Unterseite hin offenen, hinsichtlich seines Volumens variierbaren Aufnahmeraum gekennzeichnet, der zur Aufnahme des Schnittgutes bestimmt ist. Die Unterseite des Gerätes ist die Seite, welche der Schneidvorrichtung zugekehrt ist und die somit zur Ausübung einer Mitnahmewirkung auf das Schnittgut bei einer Bewegung relativ zu der Schneidvorrichtung bestimmt ist. Durch die Anordnung eines Aufnahmeraumes besteht eine gute Möglichkeit zur Fixierung des Schnittgutes, insbesondere einer großen Menge an Schnittgut, wobei dadurch, dass das Volumen des Aufnahmeraumes an das Schnittgut und/oder den Fortschritt des Schneidvorgangs anpassbar ist, einerseits eine hohe Flexibilität gegeben ist und andererseits die Möglichkeit eingeräumt wird, nach Maßgabe des Fortschritts des Schneidvorgangs manuell Druck auf das Schnittgut auszuüben, um dieses in den Eingriffsbereich der Messer der Schneidvorrichtung zu bringen. Das Küchengerät besteht im Wesentlichen aus zwei Teilen, nämlich einem Unterteil und einem gegenüber diesem zwischen zwei Grenzpositionen bewegbar gehaltenen Oberteil, welches mit einer beweglich angeordneten Wandung des Aufnahmeraumes in Verbindung steht, nämlich mit dem Ziel, dessen Volumen dem zu behandelnden Schnittgut anzupassen. Infolge der unmittelbaren Verbindung zwischen dieser Wandung und dem Oberteil ist die Möglichkeit gegeben, auf das Schnittgut manuell Druck auszuüben. Der Aufnahmeraum kann grundsätzlich von seiner Geometrie her beliebig gestaltet sein, wobei wenigstens eine Wandung mit Hinblick auf den genannten Zweck beweglich angeordnet ist. Das Ober- und das Unterteil können besonders vorteilhaft als Kunststoff-Spritzgussteile ausgebildet sein. Das Küchengerät weist eine ebene Unterseite auf, in die eine Öffnung eingeformt ist, wobei in dieser Öffnung - an deren Geometrie angepasst - eine Platte aufgenommen ist, welche die bewegliche Wandung des Aufnahmeraumes bildet, so dass diese Platte mit dem Oberteil des Gerätes in Verbindung steht. Zur Unterstützung einer Mitnahmewirkung auf das Schnittgut ist die Unterseite des Gerätes wenigstens teilweise mit Profilelementen wie z.B. Domen und dergleichen ausgerüstet, die zur Ausübung eines Formschlusses mit dem Schnittgut geeignet sind. Nachdem die genannte Platte die bewegliche Wandung des Aufnahmeraumes bildet, wird dieser im Übrigen durch die, sich an die genannte Öffnung anschließenden Wandungen des Unterteils definiert. Die Unterseite der genannten Platte ist ebenfalls mit Hinblick auf die Ausübung einer Mitnahmewirkung auf das Schnittgut eingerichtet. Es kann dies in gleicher Weise geschehen wir bei dem Unterteil im Übrigen, nämlich durch Anordnung von Domen oder vergleichbaren Profilelementen. Das Oberteil des Küchengerätes ist erfindungsgemäß nach Art einer an sich bekannten Saftpresse ausgebildet. Dieses kann beispielsweise unverdrehbar auf dem Unterteil festgelegt sein, welch letzteres eine rinnenartige Aufnahme für ausgepressten Saft bildet. Neben dieser unverdrehbaren Anordnung des Oberteils ist gleichermaßen denkbar, das Oberteil mit einem eigenen Antrieb zu versehen, welche das Oberteil beispielsweise infolge Ausübung einer Druckkraft in Richtung auf das Unterteil hin um eine Vertikalachse in Umdrehungen versetzt. Ein besonders einfacher Aufbau ergibt sich dadurch, dass die genannte Ringwandung einerseits zur radial innenseitigen Begrenzung der rinnenartigen Aufnahme des Unterteils und andererseits als radial außenseitige Begrenzung des Aufnahmeraumes Verwendung findet.

Die Merkmale der Ansprüche 3 bis 5 sind auf eine weitere Ausgestaltung des Unterteils, insbesondere der genannten Auswölbung gerichtet. Entsprechend der kegelstumpfartigen Ausgestaltung der Auswölbung kann auch das Oberteil eine global kegelstumpfartige bzw. kegelartige Ausgestaltung aufweisen, wobei beide Profile, nämlich dasjenige des Oberteils und dasjenige des Unterteils als teilweise verschachtelt ineinander angeordnete Profile anzusehen sind. Ein Stützring, der unterseitig an dem Oberteil angeformt ist, dient in der einen der beiden Grenzpositionen der Auflagerung des Oberteils auf dem Boden des Unterteils, und zwar innerhalb der genannten rinnenartigen Aufnahme.

Außenseitige Profilierungen des Stützringes entsprechend den Merkmalen des Anspruchs 6 dienen der Verbesserung der Handhabbarkeit des Küchengerätes. So kann auf diesem Wege das Oberteil erfasst und unter Klemmung des Schnittgutes gegen eine Schneidvorrichtung gepresst werden, wobei aufgrund des Klemmdruckes ein Nachführen des Oberteils und damit eine Variierung des Aufnahmeraumes nach Maßgabe des Fortschritts des Schneidvorgangs gegeben ist.

Der unterseitige Steg des Unterteils entsprechend den Merkmalen des Anspruchs 7 dient gleichermaßen der Verbesserung der praktischen Handhabbarkeit des Küchengerätes im Zusammenwirken mit einer Schneidvorrichtung, die mit seitlichen Führungsschienen versehen ist, die zum Umfassen des Steges bestimmt sind. Ein auf diese Weise gegebener Eingriff zwischen dem Küchengerät einerseits und der Schneidvorrichtung andererseits bringt den Vorteil mit sich, dass lediglich Relativbewegungen zwischen dem Küchengerät und der Schneidvorrichtung in einer, durch den Verlauf der Führungsschienen vorgegebenen Richtung möglich sind, so dass ein zufälliges Abgleiten in seitlicher Richtung, welches in Abhängigkeit von der konkreten Ausbildung der Schneidvorrichtung mit nicht unbeträchtlichen Verletzungsgefahren für den Benutzer verbunden ist, unterbunden ist. Infolge der Längenbemessung der Profilelemente des Unterteils und der Platte relativ zu der Erstreckung des Steges ist insoweit ein großer praktischer Vorteil gegeben, als ein Abstellen des Küchengerätes auf einer ebenen Unterlage ermöglicht wird, ohne dass diese durch die genannten Profilelemente oder sonstige Oberflächenprofilierungen beschädigt werden kann.

Die Merkmale des Anspruchs 9 sind auf eine mögliche Ausgestaltung der zur Führung des Oberteils gegenüber dem Unterteil benötigten Konstruktionselemente gerichtet. Diese bringen in der konkreten Ausgestaltung zugleich den Vorteil einer unverdrehbaren Führung des Oberteils gegenüber dem Unterteil mit sich.

Die Merkmale des Anspruchs 10 bringen einen besonders übersichtlichen konstruktiven Aufbau des erfindungsgemäßen Küchengerätes mit sich.

Man erkennt aus obigen Ausführungen, dass in dem erfindungsgemäßen Küchengerät ein flexibel nutzbares, einfach gestaltetes und als effizienter Restehalter für das Zerschneiden von Gemüse, Obst und vergleichbaren Lebensmitteln im Zusammenwirken mit einer Schneidvorrichtung nutzbares Gerät zur Verfügung gestellt ist.

Die Erfindung wird im Folgenden unter Bezugnahme auf das in den Zeichnungen schematisch wiedergegebene Ausführungsbeispiel näher erläutert werden.

Es zeigen:
Fig. 1 eine perspektivische oberseitige Ansicht des erfindungsgemäßen Küchengerätes;
Fig. 2 eine Darstellung einer Schnittansicht des Küchengerätes in einer mittleren Schnittebene II-II der Fig. 1 in einer ersten Arbeitsstellung;
Fig. 3 eine der Fig. 2 entsprechende Schnittansicht des Küchengerätes in einer zweiten Arbeitsstellung;
Fig. 4 eine perspektivische unterseitige Ansicht des Küchengerätes in der ersten Arbeitsstellung;
Fig. 5 eine perspektivische unterseitige Ansicht des Küchengerätes in der zweiten Arbeitsstellung;
Fig. 6 eine beispielhafte Darstellung des Zusammenwirkens des Küchengerätes mit einem Gemüsehobel als Beispiel einer Schneidvorrichtung.
Fig. 7 eine Draufsicht auf den Gemüsehobel entsprechend einer Ebene VII-VII der Fig. 6.

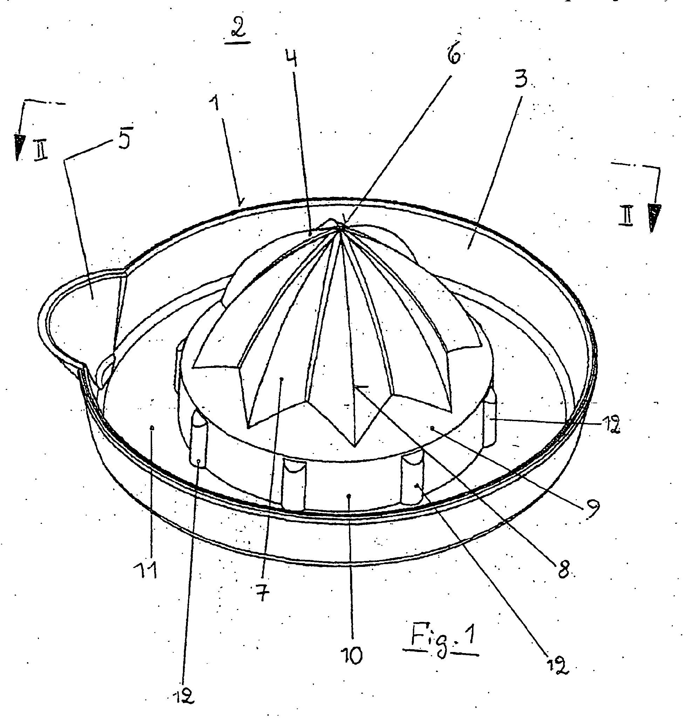

Das erfindungsgemäße, global in Fig. 1 gezeigte Küchengerät besteht aus einem Unterteil 1, welches im peripheren Bereich eine ringartige, zur Oberseite 2 hin offene rinnenartige Aufnahme 3 bildet und einem gegenüber diesem in einer im Folgenden noch näher zu beschreibenden Weise vertikal zwischen zwei Grenzpositionen bewegbaren zentral angeordneten Oberteil 4.

Die genannte Aufnahme 3 ist zur Aufnahme beispielsweise von ausgepresstem Saft bestimmt und mit einer in deren äußere Wandung eingeformten Ausgießtülle 5 versehen.

Das Oberteil 4 ragt oberseitig aus der Struktur des ringartigen Unterteils 1 mittig hervor und der hervorragende Teil weist eine außenseitig global pyramidenförmige, in einem zentralen Gipfelpunkt 6 endende Grundgestalt auf. Ausgehend von dem Gipfelpunkt 6 erstrecken sich in gleichförmiger Umfangsverteilung eine Reihe von Rippen 7, die untereinander gleich beschaffen sind und jeweils eine im Querschnitt die Gestalt eines gleichschenkligen Dreiecks aufweisen, dessen Spitze eine Kante 8 bildet, die ausgehend von dem Gipfelpunkt 6 zur Unterseite hin bis zu einer sich horizontal erstreckenden Bodenplatte 9 einen bogenförmigen Verlauf nimmt. Die Rippen 7 können dahingehend bemessen sein, dass sich deren Kanten 8 auf der äußeren Peripherie der kreisförmigen Bodenplatte 9 oder ausgehend von deren Peripherie auf einem radial einwärts gelegenen Kreisumfang befinden.

An die Bodenplatte 9 schließt sich außenumfangsseitig ein Stützring 10 an, dessen Wandungen senkrecht orientiert sind und der bodenseitig in der in Fig. 1 gezeigten einen Grenzposition auf dem Boden 11 der Aufnahme 3 aufliegt.

Die vorstehend benutzten Begriffe "horizontal", "vertikal", "Oberseite" und "Unterseite" sind bezüglich des Küchengerätes dahingehend zu verstehen, dass sich das Unterteil 1 auf einer ebenen horizontalen Unterlage befindet.

Auf der Außenseite des Stützringes 10 befinden sich in gleichförmiger Verteilung eine Reihe von Griffelementen 12 bzw. sonstigen, vergleichbaren Profilelementen, deren Zweck darin besteht, die manuelle Erfassbarkeit des Oberteils 4 zu verbessern. Auch hierauf wird im Folgenden noch näher eingegangen werden.

Es wird im Folgenden ergänzend auf die Zeichnungsfiguren 2 bis 5 Bezug genommen, in denen Funktionselemente, die mit denjenigen der Fig. 1 übereinstimmen, entsprechend beziffert sind, so dass auf eine diesbezügliche wiederholte Beschreibung verzichtet werden kann.

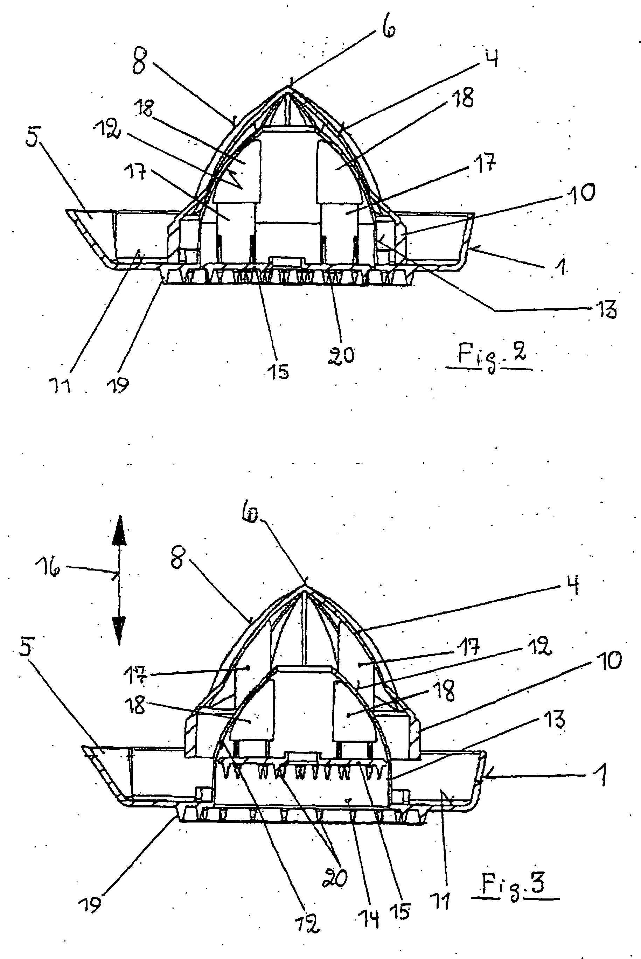

Mit 12 ist eine einstückig mit dem Unterteil 1 ausgebildete, sich mittig zu diesem erstreckende oberseitige Auswölbung bezeichnet, die sich in dem, insbesondere in den Fig. 1, 2 gezeigten Grenzpositionen des Oberteils 4 innerhalb des Oberteils 4 erstreckt und eine global pyramidenstumpfartige, an diejenige des Oberteils 4 angepasste Gestalt aufweist. Diese Auswölbung 12 endet unterseitig in einer sich senkrecht erstreckenden Ringwandung13, welche gleichzeitig die radial innenseitige Wandung der genannten rinnenartigen Aufnahme 3 bildet. Diese Ringwandung 13 erstreckt sich in jeder Stellung des Oberteils 4 koaxial zu dem Stützring 10, und zwar innerhalb desselben.

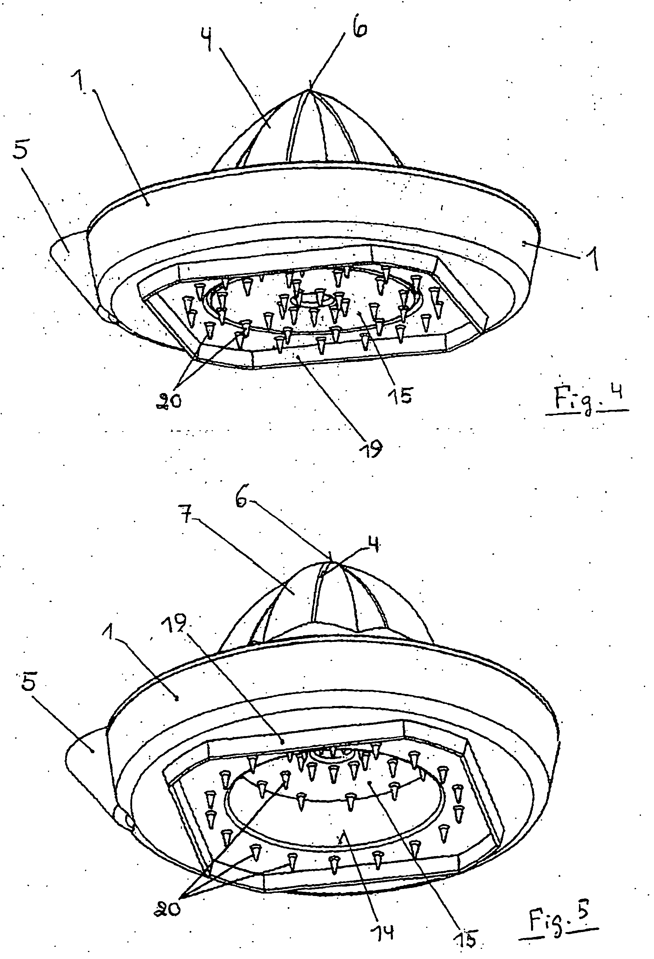

Die Auswölbung 12 ist unterseitig offen ausgebildet und endet in einer bodenseitigen, im Querschnitt kreisförmigen Öffnung 14, die sich wiederum koaxial zu der Ringwandung 13 bzw. dem Stützring 10 erstreckt. Innerhalb des zylindrischen, im Wesentlichen durch die Ringwandung 13 bestimmten Raumes ist eine ebenfalls kreisförmige Platte 15 in Richtung der Pfeile 16 verschiebbar angeordnet, und zwar zwischen zwei Grenzpositionen, deren erste in Fig. 2 und deren zweite in Fig. 3 gezeigt ist. Zu diesem Zweck steht die Platte 15 mit mehreren, in Umfangsrichtung gleichförmig verteilt angeordneten, sich vertikal erstreckenden Führungsschienen 17 mit der zugekehrten Innenseite des Oberteils 4 in Verbindung, wobei diese Führungsschienen 17 durch entsprechende, in die Struktur der Auswölbung 12 eingearbeitete Schlitze hindurchgeführt sind. Die Führungsschienen 18 erfahren eine besondere Führungswirkung durch innerhalb der Auswölbung 12 angeordnete, an das Profil der Führungsschienen 17 angepasste Führungsaufnahmen 18, durch welche sie sich hindurch erstrecken. Sie sind im Übrigen an der Oberseite der Platte 15 befestigt. Die Platte 15 bildet somit eine mit dem Oberteil 4 in Verbindung stehende, gegenüber dem Unterteil 1 unverdrehbar geführte Funktionseinheit.

Die Führungsschienen 17 sind unter Anpassung an die Position des Stützringes 10 dahingehend bemessen, dass sich die Platte 15 in der einen, in Fig. 2 dargestellten Grenzposition des Oberteils 4 in etwa in der Ebene des Bodens 11 des Unterteils 1 erstreckt.

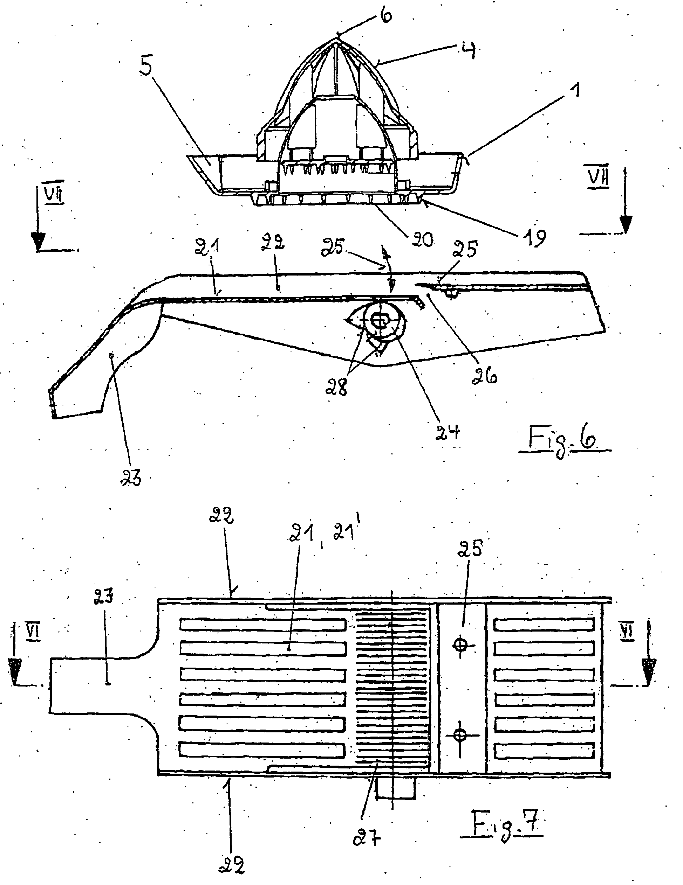

Wie insbesondere die Fig. 4 und 5 erkennen lassen, ist die Unterseite des Unterteils 1 durch einen, die Öffnung 14 mit Abstand umgebenden, in sich geschlossenen Steg 19 gekennzeichnet, der sich senkrecht erstreckt und dessen untere Begrenzungskante somit die Aufstandsfläche des Küchengerätes bildet. In dem gezeigten Ausführungsbeispiel ist der Steg 19 entlang eines Quadrates angeordnet, dessen Kanten gleichförmig abgeschrägt sind.

Sowohl der, die bodenseitige Öffnung 14 umgebende, durch den Steg umgrenzte Bereich des Unterteils 1 als auch die unterseitige Oberfläche der Platte 15 sind in gleichförmiger Verteilung mit Domen 20 oder vergleichbaren, vorzugsweise spitz- bzw. scharfkantig endenden Profilelementen überzogen, die sich vertikal erstrecken, und zwar in einem im Wesentlichen den vertikalen Abmessungen des Steges 19 entsprechenden Ausmaß.

Die Bewegbarkeit des Oberteils 4 gegenüber dem Unterteil 1 wird vor obigem Hintergrund zum einem dadurch begrenzt, dass in der in Fig. 2 gezeigten ersten Grenzposition die Dorne 20 sowohl der Platte 15 als auch des Unterteils 1 auf einer ebenen Unterlage aufliegen. Es ist dies zugleich die Position, bei welcher eine weitere Bewegung durch ein Anliegen von Teilen der Innenseite des Oberteils 4 auf der Außenseite der Auswölbung 12 gekennzeichnet ist. Die andere, in Fig. 3 gezeigte zweite Grenzposition des Oberteils 4 ist dadurch definiert, dass eine weitere Bewegung zur Oberseite 2 hin durch die, sich kegelstumpfförmig verjüngende Innenseite der Auswölbung 12 begrenzt ist.

Zur Erläuterung des Gebrauchs des erfindungsgemäßen Küchengerätes wird im Folgenden auf die Zeichnungsfiguren 6 und 7 Bezug genommen. Diese erläutern die eine der beiden möglichen Verwendungen des Gerätes als Restehalter, und zwar im Zusammenwirken mit einem an sich bekannten und lediglich beispielhaften dargestellten Gemüsehobel.

Der Gemüsehobel ist oberseitig durch eine Führungsfläche 21 gekennzeichnet, die seitlich beiderseits durch sich in Längsrichtung und senkrecht zu der Führungsfläche 21 erstreckende Führungsstege 22 gekennzeichnet ist. Mit 23 ist ein Handgriff bezeichnet, der der manuellen Handhabung des Gemüsehobels während der Benutzung dient. Die Führungsfläche 21 endet auf ihrer, dem Handgriff 23 abgekehrten Seite in einer Federzunge 21', die auf dem Außenprofil einer Exzenterwelle 24 abgestützt ist und nach Maßgabe deren Drehung in Richtung der Pfeile 25 verschwenkbar ist. Das freie Ende der Federzunge 21' liegt der Schneide eines Messers 25 gegenüber, wobei die Schneide dieses Messers mit dem freien Ende der Federzunge einen Schlitz 26 bildet, dessen Schlitzweite nach Maßgabe der Drehung der Exzenterwelle 24 unter elastischer Auslenkung der Federzunge 21' einstellbar ist.

Das, dem Schlitz 26 zugekehrte Ende der Federzunge 21' ist seinerseits mit einer Schlitzanordnung 27 versehen, welche zur Hindurchführung von Messern 28 bestimmt sind, die nach Maßgabe unterschiedlicher Profile und/oder radialer Abmessungen auf der Exzenterwelle 24 angeordnet sind. Man erkennt, dass ohne die Verwendung der Messer 28 der Exzenterwelle 24 der Gemüsehobel zum Schneiden von Scheiben eingerichtet ist, deren Scheibenbreite durch die Einstellung des Schlitzes 26 bestimmt ist. Sobald durch entsprechende Drehung der Exzenterwelle 24 deren Messer 28 die Schlitzanordnung 27 durchdringen, kann das Gerät gleichermaßen zum streifenartigen Schneiden des jeweiligen Schnittgutes benutzt werden.

Ein solcher Gemüsehobel ist Stand der Technik und nicht Gegenstand der Erfindung. Das erfindungsgemäße Küchengerät kann jedoch dahingehend an diesen angepasst sein, dass die Breite der quadratischen Grundfigur des Steges 19 an den innenseitigen Abstand der Führungsstege 22 angepasst ist. Dies bedeutet, dass das Küchengerät von der Oberseite des Gemüsehobels her zwischen die Führungsstege 22 einsetzbar ist und in der Folge entlang dieser Führungsstege 22 zwecks Bearbeitung des jeweiligen Schnittgutes manuell bewegbar ist.

Hieraus ergibt sich, dass der Steg 19, soweit in Verbindung mit den Führungsstegen 22 eine Führungswirkung ausübbar ist, nicht notwendigerweise die Gestalt einer geschlossenen Kurve haben muss.

Der Gebrauch des erfindungsgemäßen Küchengerätes als Restehalter gestaltet sich vor diesem Hintergrund wie folgt:

Es wird das als Rest zu betrachtende Schnittgut unterseitig durch die Dorne 20 fixiert und in der Anfangsposition somit innerhalb des, durch die Ringwandung 13 seitlich umgrenzten Raumes aufgenommen. Das Küchengerät wird anschließend auf den Gemüsehobel gesetzt und zwar derart, dass sich zwei einander gegenüberliegende Stege 19 zwischen den Führungstegen 22 des erstgenannten befinden. Anschließend kann der Schnittvorgang in üblicher Weise ausgeführt werden, wobei entsprechend dessen Fortschritts über das Oberteil 4 gleichförmig Druck auf den noch zu bearbeitenden Rest des Schnittgutes ausübbar ist, wobei sich die Platte 15 in der Endphase schließlich in einer gemeinsamen Ebene mit dem Boden 11 befindet.

Von besonderem Vorteil ist hierbei, das infolge der beweglich angeordneten Dorne 20 das Schnittgut somit in jeder Phase des Bearbeitungsvorgangs fixiert ist und eine zügige und effiziente Bearbeitung ermöglicht wird. Weiterhin von Vorteil ist, dass infolge der seitlichen Führung des Küchengerätes Relativbewegungen zwischen diesem und dem Gemüsehobel in lediglich einer Richtung möglich sind und insbesondere ein seitliches, unfallträchtiges Abgleiten zuverlässig unterbunden ist.

Eine Haltefunktion auf das zu bearbeitende Schnittgut kann nicht nur über die Dorne 20 der Platte 15 sondern auch über diejenigen des Unterteils 1 ausgeübt werden, welche die Öffnung 14 umgeben.

Eine zweite Funktion des erfindungsgemäßen Küchengerätes besteht in einer an sich bekannten, keiner weiteren Erläuterung bedürftigen Saftpresse.

Sämtliche Teile des erfindungsgemäßen somit als Mehrzweckgerät anzusehenden Küchengeräte sind vorzugsweise als Kunststoff-Spritzgussteile ausgebildet.

## Patentansprüche

1. Zum Halten und Führen von Schnittgut wie z.B. Gemüse, Obst und sonstigen Lebensmitteln bei einem Schneidvorgang gegenüber einer Schneidvorrichtung bestimmtes Küchengerät, dessen unmittelbar mit dem Schnittgut zusammenwirkende Abschnitte zur Ausübung einer Mitnahmewirkung auf das Schnittgut zumindest teilweise mit Profilelementen versehen sind, mit einem unterseitig auf der der Schneidvorrichtung zugekehrten Seite offenen, zur zumindest teilweisen Aufnahme des Schnittgutes bestimmten Aufnahmeraum, der unter Anpassung an das Volumen des Schnittgutes und/oder den Fortgang des Schneidvorganges anpassbar ausgestaltet ist, bestehend aus einem, zumindest die fest angeordneten Seitenwandungen des Aufnahmeraumes bildenden Unterteil (1) und einem zumindest eine bewegliche Wandung des Aufnahmeraumes bildenden Oberteil (4), wobei das Oberteil (4) gegenüber dem Unterteil (1) zwischen zwei Grenzpositionen verschiebbar ist, wobei das Unterteil (1) eine ebene Unterseite aufweist, in welche eine Öffnung (14) eingeformt ist, wobei in der Öffnung (14) eine an deren Gestalt angepasste, die bewegliche Wandung des Aufnahmeraumes bildende und mit dem Oberteil (4) in Verbindung stehende Platte (15) zwischen den genannten Grenzpositionen verschiebbar geführt ist, wobei diese Platte einerseits und die sich an die Öffnung (14) anschließenden Wandungen des Unterteils (1) andererseits den Aufnahmeraum bilden und wobei die Platte (15) auf ihrer, der Unterseite des Gerätes zugekehrten Seite zur Ausübung einer Mitnahmewirkung auf das Schnittgut eingerichtet ist, **dadurch gekennzeichnet, dass** das Oberteil (4) außenseitig nach Art einer an sich bekannten Saftpresse ausgestaltet ist, dass das Unterteil (1) eine an diese angepasste, zur Oberseite (2) hin offene, rinnenartige, sich in der Draufsicht gesehen ringförmig um das Oberteil (4) herum erstreckende Aufnahme (3) für ausgepressten Saft bildet und dass das Unterteil (1) zumindest in dem, die Öffnung (14) umgebenden Bereich der Unterseite zumindest teilweise zur Ausübung einer Mitnahmewirkung auf das Schnittgut eingerichtet ist.

2. Küchengerät nach Anspruch 1, **dadurch gekennzeichnet, dass** das Unterteil (1) mit einer, sich zur Oberseite (2) hin erstreckenden, gestaltlich global an das Oberteil (4) angepassten Auswölbung (12) versehen ist, dass die Auswölbung (12) als Führung für die demgegenüber bewegliche Anordnung des Oberteils (4) ausgestaltet ist, dass die Auswölbung (12) zumindest teilweise innenseitig den Aufnahmeraum begrenzt und dass eine, sich an die Öffnung (14) anschließende Ringwandung (13) der Auswölbung (12) die Begrenzung der Aufnahme (3) und des Aufnahmeraumes bildet.

3. Küchengerät nach Anspruch 1 oder 2, **dadurch gekennzeichnet, dass** die Öffnung (14) das unterseitig offene Ende der Auswölbung bildet.

4. Küchengerät nach einem der Ansprüche 1 bis 3, **dadurch gekennzeichnet, dass** die Auswölbung (12) eine global pyramidenstumpfartige Gestalt aufweist.

5. Küchengerät nach einem der vorangegangenen Ansprüche 1 bis 4, **dadurch gekennzeichnet, dass** die äußere periphere Berähdung des Oberteils (4) durch einen sich vertikal erstreckenden Stützring (10) gebildet ist, dass die Platte (15) mit der Maßgabe an dem Oberteil (4) befestigt ist, dass diese sich in der einen der beiden Grenzpositionen des Oberteils (4) in einer gemeinsamen Ebene mit einem Boden (11) der Aufnahme (3) befindet.

6. Küchengerät nach Anspruch 5, **dadurch gekennzeichnet, dass** der Stützring (10) auf seiner Außenseite mit Griffelementen (12) oder vergleichbaren Profilierungen zur Verbesserung der manuellen Handhabbarkeit versehen ist.

7. Küchengerät nach einem der vorangegangenen Ansprüche 1 bis 6 **gekennzeichnet durch** einen, aus der Unterseite des Unterteils (1) herausragenden Steg (19), der in der Gestalt einer vorzugsweise geschlossenen Kurve, beispielsweise eines Rechtecks oder eines Quadrates die Öffnung (14) umgibt und dass die Kurve Durchmesser- bzw. Seitenabmessungen aufweist, die an diejenigen seitlicher, die Kurve umfassender Führungsschienen der Schneidvorrichtung anpassbar sind, so dass **durch** innenseitige beidseitige Anlage des Steges (19) an diesen Führungsschienen während des Schneidvorgangs eine Führungswirkung auf die Relativbewegung zwischen dem Küchengerät und der Schneidvorrichtung ausübbar ist.

8. Küchengerät nach Anspruch 7, **dadurch gekennzeichnet, dass** jegliche zur Ausübung einer Mitnahmewirkung auf das Schnittgut bestimmte Profilelemente des Unterteils (1) und der Platte (15) eine Erstreckung senkrecht zu der Ebene der Unterseite (1) aufweisen, die höchstens der Erstreckung des Steges (19) entspricht.

9. Küchengerät nach einem der Ansprüche 2 bis 8, **gekennzeichnet durch** Führungsschienen (17), die einerseits an der Seite des Oberteils (4) und andererseits an der Oberseite der Platte (15) befestigt sind, die sich **durch** Schlitze der Auswölbung (12) des Unterteils (1) hindurch erstrecken und dass an der Innenseite der Auswölbung (12), sich an die genannten Schlitze anschließend Führungsprofile (18) befestigt sind, welche zur Aufnahme der Führungsschienen (17) bestimmt und eingerichtet sind.

10. Küchengerät nach einem der vorangegangenen Ansprüche 5 bis 9, **dadurch gekennzeichnet, dass** die Öffnung (14), die Platte (15), die Ringwandung (13) sowie der Stützring (10) in der Draufsicht gesehen kreisförmig ausgestaltet und koaxial zueinander angeordnet sind.

## Claims

1. Kitchen utensil which is intended to hold and guide, with respect to a cutting device, products to be cut such as for example vegetables, fruit and other foodstuffs during a cutting procedure, wherein sections of the kitchen utensil directly cooperating with the product to be cut are provided at least partly with profiled elements for exerting an entraining effect upon the product to be cut, having a receiving chamber which is intended to at least partly receive the product to be cut, is open on the lower side on the side facing the cutting device and is formed so as to be adaptable so as to adapt to the volume of the product to be cut and/or to the progress of the cutting procedure, consisting of a lower part (1) which forms at least the fixedly disposed lateral walls of the receiving chamber, and of an upper part (4) which forms at least one movable wall of the receiving chamber, wherein the upper part (4) can be displaced with respect to the lower part (1) between two end positions, wherein the lower part (1) comprises a flat lower side in which an opening (14) is formed, wherein in the opening (14) a plate (15) which is adapted to the shape of the opening, forms the movable wall of the receiving chamber and is connected to the upper part (4) is guided in a displaceable manner between said end positions, wherein this plate on the one hand and the walls of the lower part (1) adjoining the opening (14) on the other hand form the receiving chamber, and wherein the plate (15) is adapted on its side facing the lower side of the utensil to exert an entraining effect upon the product to be cut, **characterised in that** the upper part (4) is formed on the exterior in the manner of a juice squeezer known *per se,* **in that** the lower part (1) forms a receiver (3) for the squeezed-out juice, which receiver extends around the upper part (4) in an annular manner as seen in the plan view, is formed in a channel-like manner, is open towards the upper side (2) and is adapted to the juice squeezer, and **in that** the lower part (1) at least in the region of the lower side surrounding the opening (14) is adapted at least partly to exert an entraining effect upon the product to be cut.

2. Kitchen utensil as claimed in Claim 1, **characterised in that** the lower part (1) is provided with a bulged portion (12) which in terms of shape is adapted generally to the upper part (4) and extends towards the upper side (2), **in that** the bulged portion (12) is formed as a guide for the arrangement of the upper part (4) which can move with respect thereto, **in that** the bulged portion (12) delimits the receiving chamber at least partly on the interior, and **in that** an annular wall (13) of the bulged portion (12) adjoining the opening (14) forms the boundary of the receiver (3) and of the receiving chamber.

3. Kitchen utensil as claimed in Claim 1 or 2, **characterised in that** the opening (14) forms the end of the bulged portion which is open on the lower side.

4. Kitchen utensil as claimed in any one of Claims 1 to 3, **characterised in that** the bulged portion (12) is generally in the shape of a pyramid frustum.

5. Kitchen utensil as claimed in any one of the preceding Claims I to 4, **characterised in that** the outer peripheral border of the upper part (4) is formed by a vertically extending support ring (10), **in that** the plate (15) is attached to the upper part (4) with the proviso that the plate is located in one of the two end positions of the upper part (4) in the same plane as the base (11) of the receiver (3).

6. Kitchen utensil as claimed in Claim 5, **characterised in that** the support ring (10) is provided on its exterior with gripping elements (12) or comparable profiled portions in order to improve the manual handing ability.

7. Kitchen utensil as claimed in any one of the preceding Claims 1 to 6, **characterised by** a web (19) which protrudes from the lower side of the lower part (1) and surrounds the opening (14) in the shape of a preferably closed curve, for example a rectangle or a square, and in that the diameter measurements or lateral measurements of the curve can be adapted to those of lateral guide rails of the cutting device comprising the curve, so that by placement of the web (19) on the interior on both sides against these guide rails during the cutting procedure a guide effect is exerted upon the relative movement between the kitchen utensil and the cutting device.

8. Kitchen utensil as claimed in Claim 7, **characterised in that** any profiled elements of the lower part (1) and of the plate (15) which are intended to exert an entraining effect upon the product to be cut extend in a perpendicular manner with respect to the plane of the lower side (1), which at most corresponds to the extension of the web (19).

9. Kitchen utensil as claimed in any one of Claims 2 to 8, **characterised by** guide rails (17) which on the one hand are attached to the side of the upper part (4) and on the other hand are attached to the upper side of the plate (15) which extend through slots in the bulged portion (12) of the lower part (1), and in that guide profiled parts (18) which adjoin said slots are attached to the interior of the bulged portion (12) and are intended and adapted to receive the guide rails (17).

10. Kitchen utensil as claimed in any one of the preceding Claims 5 to 9, **characterised in that** the opening (14), the plate (15), the annular wall (13) and the support ring (10) are formed in a circular manner as seen in the plan view and are disposed coaxially with respect to each other.

## Revendications

1. Ustensile de cuisine destiné à tenir et guider des produits à couper, par exemple des légumes, des fruits ou autres aliments, pendant une opération de coupe en relation avec un dispositif de coupe, dont les parties coopérant directement avec le produit à couper sont dotées au moins partiellement d'éléments profilés pour exercer un effet d'entraînement sur le produit à couper, avec un espace de logement destiné à recevoir au moins partiellement le produit à couper et ouvert sur le dessous sur le côté orienté vers le dispositif de coupe, qui est adaptable au volume du produit à couper et/ou à l'avancement de l'opération de coupe, composé d'une partie inférieure (1) formant les parois latérales fixes de l'espace de logement et d'une partie supérieure (4) formant au moins une paroi mobile de l'espace de logement, la partie supérieure (4) étant mobile entre deux positions limites par rapport à la partie inférieure (1), laquelle partie inférieure (1) présente une face inférieure plane dans laquelle est formée une ouverture, ouverture (14) dans laquelle une plaque (15) adaptée à sa forme, formant la paroi mobile de l'espace de logement et reliée à la partie supérieure (4) est guidée de façon coulissante entre lesdites positions limites, cette plaque et les parois de la partie inférieure (1) se raccordant à l'ouverture (14) formant l'espace de logement et la plaque (15) étant conformée sur sa face orientée vers la face inférieure de l'appareil de manière à exercer un effet d'entraînement sur le produit à couper, **caractérisé en ce que** la partie supérieure (4) est conformée extérieurement comme un presse-agrumes connu en soi, **en ce que** la partie inférieure (1) forme un réceptacle (3) pour le jus pressé adapté à celle-ci, ouvert vers la face supérieure (2), en forme de gouttière et s'étendant en formant un anneau, en vue de dessus, autour de la partie supérieure (4), et **en ce que** la partie inférieure (1) est conformée au moins partiellement, au moins dans la zone de la face inférieure entourant l'ouverture (14), de manière à exercer un effet d'entraînement sur le produit à couper.

2. Ustensile de cuisine selon la revendication 1, **caractérisé en ce que** la partie inférieure (1) est dotée d'un bombement (12) s'étendant vers la partie supérieure (2) et dont la forme et globalement adaptée à la partie supérieure (4), **en ce que** le bombement (12) est conformé comme un guide pour la disposition de la partie supérieure (4) mobile par rapport à lui, **en ce que** le bombement (12) délimite au moins partiellement l'espace de logement sur l'intérieur et **en ce qu'**une paroi annulaire (13) du bombement (12) se raccordant à l'ouverture (14) forme la limite du réceptacle (3) et de l'espace de logement.

3. Ustensile de cuisine selon la revendication 1 ou 2, **caractérisé en ce que** l'ouverture (14) forme l'extrémité ouverte vers le bas du bombement.

4. Ustensile de cuisine selon l'une ou l'ensemble des revendications 1 à 3, **caractérisé en ce que** le bombement (12) a une forme globale de pyramide tronquée.

5. Ustensile de cuisine selon l'une ou l'ensemble des revendications 1 à 4, **caractérisé en ce que** le bord périphérique extérieur de la partie supérieure (4) est formé par une bague d'appui (10) verticale, **en ce que** la plaque (15) est fixée à la partie supérieure (4) de telle manière que celle-ci se trouve dans une des deux positions limites de la partie supérieure (4) dans le même plan qu'un fond (11) du réceptacle (3).

6. Ustensile de cuisine selon la revendication 5, **caractérisé en ce que** la bague d'appui (10) est dotée sur sa face extérieure d'éléments de prise (12) ou de profilages comparables pour améliorer la maniabilité manuelle.

7. Ustensile de cuisine selon l'une ou l'ensemble des revendications 1 à 6, **caractérisé en ce qu'**il comporte une barrette (19) dépassant de la face inférieure de la partie inférieure (1), entourant l'ouverture (14) en formant une courbe de préférence fermée, par exemple un rectangle ou un carré, et **en ce que** la courbe présente des dimensions de diamètre ou de côtés adaptables à ceux de rails de guidage du dispositif de coupe entourant la courbe, de sorte que l'appui intérieur bilatéral de la barrette (19) sur ces rails de guidage pendant l'opération de coupe permette d'exercer un effet de guidage du déplacement relatif entre l'ustensile de cuisine et le dispositif de coupe.

8. Ustensile de cuisine selon la revendication 7, **caractérisé en ce que** les éléments profilés de la partie inférieure (1) et de la plaque (15) destinés à exercer un effet d'entraînement sur le produit à couper ont une étendue perpendiculairement au plan de la partie inférieure (1) au maximum égale à l'étendue de la barrette (19).

9. Ustensile de cuisine selon l'une ou l'ensemble des revendications 2 à 8, **caractérisé en ce qu'**il comporte des rails de guidage (17) qui sont fixés d'une part sur le côté de la partie supérieure (4) et d'autre part sur la face supérieure de la plaque (15), qui s'étendent à travers des fentes du bombement (12) de la partie inférieure (1), et **en ce qu'**il est prévu des profilés de guidage (18) fixés à la face intérieure du bombement (12) et se raccordant auxdites fentes, qui sont destinés à recevoir les rails de guidage (17).

10. Ustensile de cuisine selon l'une ou l'ensemble des revendications 5 à 9, **caractérisé en ce que** l'ouverture (14), la plaque (15), la paroi annulaire (13) et l'anneau d'appui (10) sont de forme circulaire en vue de dessus et disposés de façon coaxiale les uns par rapport aux autres.
